# EUROPEAN PATENT APPLICATION

(11) **EP 0 661 526 A1**
(43) Date of publication of application: **05.07.1995**
(21) Application number: 94119076.1
(22) Date of filing: 02.12.1994
(51) Int. Cl.: G01F 15/06, G08C 23/02

(54) **A method of gathering information from water meters and a system for its use**

(30) Priority: 02.12.1993 IL 10784793
(71) Applicant: MAYCOM Communications Ltd., Kiryat Arba 90100 (IL)
(72) Inventor: Paz, Ilan, Alon Shvut, Gush Etzion 90433 (IL)
(74) Representative: Benedum, Ulrich Max, Dr.

(57) **Abstract**

A method for reading electronic water meters by means of a longitudinal mechanical wave transmitter/receiver which transmits information through the pipe walls of the water pipes wherein a longitudinal mechanical wave transmitter located on the pipe next to the consumer water meter of local water meter transmits, in accordance with a command or at a predetermined time, information located in the meter on a longitudinal mechanical wave to a longitudinal mechanical receiver located in a local or regional longitudinal mechanical receiver.

## Description

### Field of the Invention

The present invention relates to a method for reading water meters and for a system for its use.

More specifically said invention relates to a method for absorbing information from consumer and local electronic water meters by means of longitudinal mechanical waves which pass through the metal of the water pipes of consumer meters to local meters, and from local meters to regional meters. The invention also relates to the combined system of meters with longitudinal mechanical waves transmitters arid receivers for use of the above method.

### Background of the Invention

At the present time in order to obtain the necessary information from the water meter, it is necessary to employ tens, hundreds, or even thousands of persons in accordance with the number of consumers, who go from meter to meter, from house to house and register the information on the meter.

The present invention proposes to water-supply companies a new and revolutionary method for reading water meters and a system for its use. The present method eliminates the need for use of manpower. Moreover, the present method constitutes a tremendous advance in as much as it not only saves manpower in reading the meters but also makes it unnecessary to attach communication wires (such as a telephone wire) in order to attach the water meters to a center where the information is absorbed.

The uniqueness of this invention lies in the use of existing water lines for transmitting information. The use of water lines saves the costs and time involved in sending workers to read the meters and saves the costs involved in establishing communication lines between the meters and centers for registering the information.

### Brief Description of the Invention

The present invention relates to a method for reading electronic water meters by means of a longitudinal mechanical wave transmitter-receiver which transmits information through the pipe walls (preferably metal walls) of the water pipes wherein a longitudinal mechanical wave transmitter located in the consumer water meter or local water meter transmits, in accordance with a command or at a predetermined time, information located in the meter on a longitudinal mechanical wave to a longitudinal mechanical wave receiver located in a local or regional longitudinal mechanical wave receiver.

The present invention also relates to a system for use of the method described above whereby the system is comprised of consumer, local and/or regional electronic or mechanical water meters, from means for transmission and reception in the infrasonic, sonic or ultrasonic range attached to these meters, from a power source for activating the means for transmission and reception, from a network of water pipes spread among the above meters, whereby the pipe walls (preferably metal walls) of the water pipes serves as a medium for transmitting the longitudinal mechanical waves, and for a means of translating the information from the meter to the transmitted longitudinal mechanical wave, and from the longitudinal mechanical wave received in the receiver to a comprehensible language.

### Detailed description of the Invention

The present invention will be further described clarified and exemplified by Figures 1, 2 and 3. These figures are by no means intended to limit the scope of the invention, and serve as examples only.

### Brief Description of the Drawings

- Figure 1: illustrates a model of a network of water pipes (in which the longitudinal mechanical waves are transmitted) between the different electronic water meters.
- Figure 2: illustrates an electronic hardware block diagram of an electronic consumer water meter connected to a longitudinal mechanical wave transmitter/receiver unit.
- Figure 3: illustrates an electronic hardware block diagram of an electronic local or regional water meter connected to a longitudinal mechanical wave transmitter/receiver unit.

### Detailed Description of the Drawings

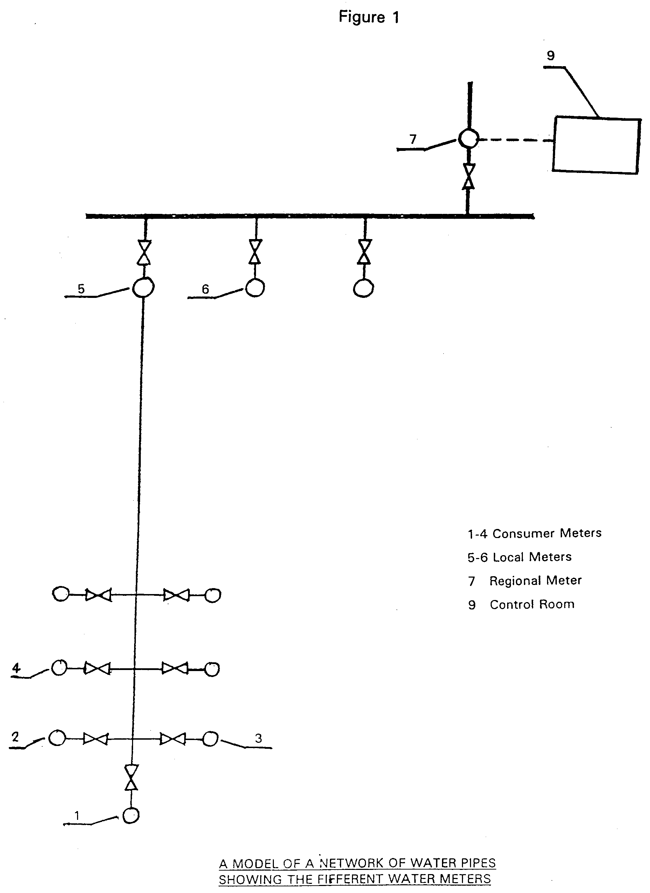

Figure 1 shows a model of a network of water pipes between the different electronic water meters.

There are three types of electronic water meters. A consumer "consumer" meter (1), a local meter (5), and a regional meter (7).

The so-called "consumer" meter is any electronic meter located in such places as homes, farms, factories, shops etc. According to the present invention said meter is equipped with an external or internal longitudinal mechanical wave transmitter/receiver unit capable of transmitting the information stored in a electronic memory at a predetermined time or according to a longitudinal mechanical wave order received by said receiver. The information is transferred on the longitudinal mechanical wave transmitted from a transmitter in the "consumer" meter (1) to a longitudinal mechanical wave receiver in the local meter (5). Said longitudinal mechanical waves are transmitted in the pipe walls (preferably metal walls) of the pipe system. The modulation can be either frequency modulation (FM) or amplitude modulation (AM) or any other change in the longitudinal mechanical wave. Every local meter is connected by water pipelines to several "consumer" meters (1) (2) (3) (4). The commands from the local meter (5) to the consumer meters (1) (2) (3) and (4) can be transmitted as pulses, with a specific frequency or code for every "consumer" meter. The information from every consumer meter can be transmitted to the local meter at different times and/or at different specific longitudinal mechanical frequency for every consumer meter. It is preferable to transmit the information at a predetermined time late at night when the water flow in the pipes is minimal.

The information may include total water flow, leaks (e.g. uninterrupted minimum flow over a period of time) or a deviant water flow. A command from the local meter can close a valve in the consumer water meter and thus close the water supply to said "consumer" meter when there is deviant water flow or when the customer hasn't paid his water bill.

In the above-mentioned water pipe network all the local meters (5) (6) receive/collect the information from every consumer water meter and transmit it via its own longitudinal mechanical wave transmitter through the pipelines or via wires to the receiver of the regional meter (7) or directly to central control room.

In principle the longitudinal mechanical wave transmitter/receiver system in the local meter operates in a similar way to that of the above-mentioned consumer meters. The capacity of the longitudinal mechanical wave transmitter/receiver in the local meter is higher than that of the consumer meter. The local meter is an intermediate data station between the "consumer" meter and an electronic regional meter (7). The regional meter absorbs and memorises all the information received from the local meters by the longitudinal mechanical wave receiver. Said regional water meter also has longitudinal mechanical wave transmitter for sending commands of operation to the local meters. The capacity of the longitudinal mechanical wave transmitter/receiver is higher in the regional meter than that of the local one.

The information in said regional water meters can be read in the conventional way (e.g. by the water firm employees) or can be transmitted to the central control room (9) of the water authorities by any other known communication facilities such as telephone-lines or by means of radio.

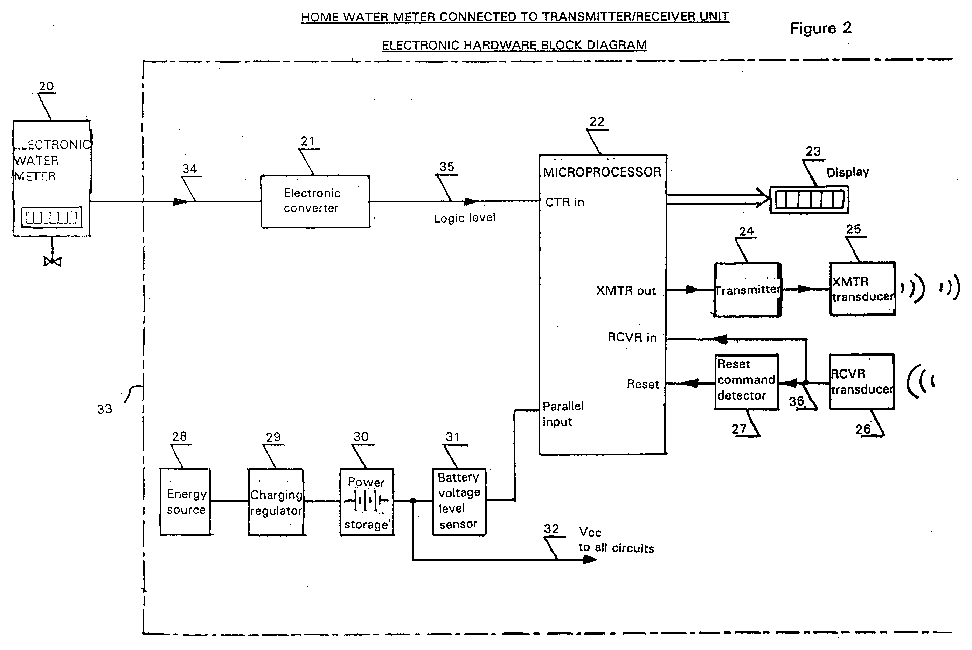

Figure 2 illustrates an electronic hardware block diagram of a consumer water meter (20) connected to a longitudinal mechanical wave transmitter/receiver unit (33). The two units (20) and (33) are separate units but are physically attached one to the other.

The longitudinal mechanical wave transmitter/receiver unit (33) has a microprocessor (22) comprising as C.P.U., program memory unit (fixed or downloadable), data memory, clock, input/output ports, and any other electronics hardware or software required for the operation of the unit. "Downloadable" according to the invention, means an electrically erasable read-only memory which can be reprogrammed by remote means to upgrade functionality at later dates, without requiring physical proximity to the microprocessor.

The electronic converter (21) receives output signal (34) from the output port, or the display of an electronic water meter (20). The signal is converted to a logic level pulse form (35) in the electronic converter (21). The logic level signal is compatible to the control input of the microprocessor (22). The rate of change of the logic level signal (35) input is proportional to the fluid flow at any specific moment in time. The microprocessor (22) drives one or more low power displays (23) which may be liquid crystal or other, either standard or custom made, to display: (i) Accumulated total water volume; (ii) Water leakage: Water leakage can be defined as a minimum flow which is the lowest flow that is held constant (within certain percentage limits of its average) over a minimum, specified period. Either one display may be used with alternating readings, or a multiple dedicated display.

The microprocessor (22) transmits information to the transmitter (24) such as: (i) accumulated flow volume; (ii) error status; (iii) leakage rate; (iv) power storage status; (v) any other information required.

The transmitter (24) in turn sends the information in a coded form to the transmitter transducer (25) comprising of modulator, amplifier and transducer. The transmitter transducer (25) creates longitudinal mechanical waves which are transmitted and passed through the water pipe system. The longitudinal mechanical receiver (26) comprising: transducer, (microphone), amplifier, band-pass frequency filter, rectification or synchronous detector, and threshold circuits, receives longitudinal mechanical wave signals in a coded form from the water in the water pipe system. The receiver transducer unit (26) translates the above-mentioned signals to logic form (36) which is fed into the microprocessor (22) RCVR in port.

The reset command detector (27) receives a remote signal from the transducer receiver (26) and transfers a signal to the reset port of the microprocessor (22) when required.

The home water meter (20) and the transmitter/receiver unit (33) are a self contained unit. As a result the energy source must be a remote self contained unit.

The energy source (28) may be one of the following: (i) external power source, i.e. electric mains (when available); (ii) solar cells operated by light; (iii) a dynamo, alternator or generator driven by the fluid flow in the pipe system; (iv) any other self contained power source.

This energy source (28) supplies power to all electronic circuits, including the electronic water meted (20).

The charging regulator (29) transforms whatever power is supplied by the power source (28) to a voltage compatible with the charging requirements of the electric power storage (30).

The power storage (30) comprises a rechargeable or other type of battery. The power storage (30) will supply the required voltage Vcc (32) to all the electronic circuits. The batter voltage level sensor (31) will check the state of the electric power storage (30) and will send a signal, on a two wire line, to the microprocessor indicating the state of the power storage (30), i.e. zero, low, medium or charged. This will allow the microprocessor (22) to send the relevant information to a central control room via the local meter in order for repairs to be done. If the power storage is in a poor state the microprocessor will perform only crucial tasks such as fluid flow. This is a low power operation and can be operated for a long period of time even with a power storage which is in a poor state.

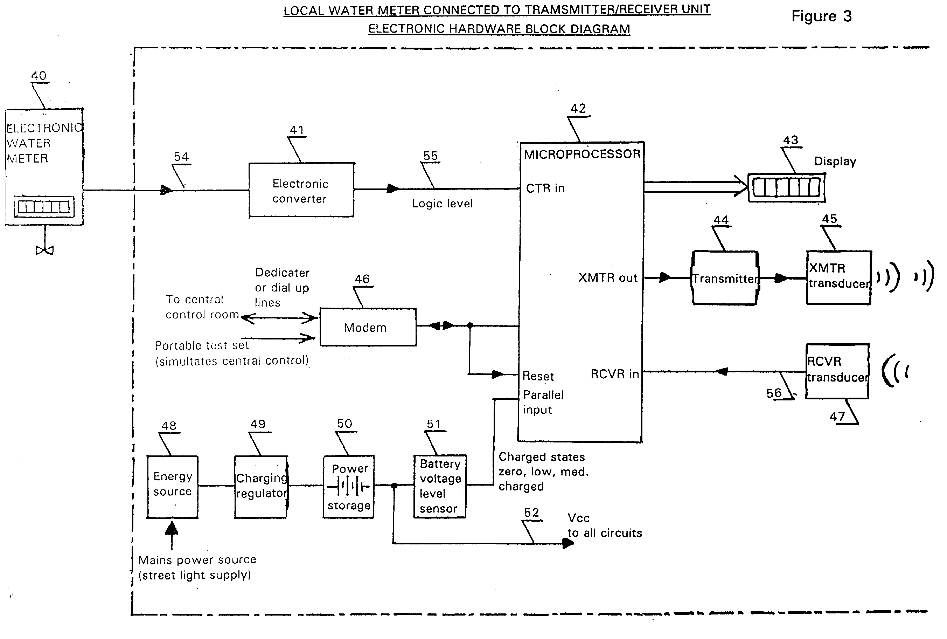

Figure 3 illustrates the electronic hardware block diagram of an electronic regional or local water meter (40) connected to a longitudinal mechanical wave transmitter/receiver unit (53). The longitudinal mechanical wave transmitter/receiver unit (53) comprises a microprocessor (42) comprising C.P.U. program memory (fixed or downloadable) data memory, clock, input/output ports ("Downloadable" means an electrically erasable read-only memory which can be reprogrammed by remote means to upgrade functionality at later dates, without requiring physical proximity to the microprocessor).

The electronic converter (41) receives output signal (54) from the output port or the display of an electronic water meter (40) the signal is converted to a logic level pulse form (55) in the electronic converter (41). The logic level signal is compatible to the control input of the microprocessor (42). The rate of change of the input is proportional to the fluid flow at any specific moment. The microprocessor (42) drives one or more low power displays (43) which may be liquid crystal or other, either standard or custom made to display: (i) accumulated total water volume; (ii) Water leaks. Water leaks can be defined as a minimum flow which is the lowest flow that is held constant (within certain percentage limits of its average ), over a minimum, specified period. One display (43) may be used with alternating readings, or a multiple dedicated display.

The microprocessor (42) transmits information either via (a) transmitter (44) or (b) modem (45).
(a) Transmitter (44) which transfers the information in a coded form to the transmitter transducer (45), comprising modulator, amplifier and transducer. The information is directed at the individual consumer water meter transmitter/receiver unit (33) (Figure 2). The transmitter transducer (45) sends "command signal" to the individual consumer water meters requesting the individual consumer meters to send information such as: (i) flow rate; (ii) accumulated water volume; (iii) battery status; (iv) leakage rate; (v) any other information required.
   Alternatively the transmitter transducer (45) can send information upgrading the functionality of the downloadable program memory.
   The longitudinal mechanical wave receiver (47) comprising transducer (microphone), amplifier, bandpass frequency filter, rectification or synchronous detector and threshold circuits, receive longitudinal mechanical wave signals in a coded form from the individual consumer water meters. This information may be: (i) flow rate; (ii) accumulated water volume; (iii) battery status; (iv) leakage rate; (v) any other information required.
   The receiver transducer unit (47) translates the received signals in a logic form (56) which are fed into the microprocessor (42) RCVR in port.
(b) Modem (46) may be either (i) a transmitter/receiver transducer which transmits and receives longitudinal mechanical waves from or to the regional water meter via the water in the pipe system; or (ii) is hard wired with dedicated or dial up lines to the regional meter or central control room.

The modem (46) may be activated by a portable test set which simulates the central control room.

This test set may be plugged in, or remote controlled either magnetic, infrared or other. This allows for a sealed transmitter/receiver unit.

The modem (46) may receive a reset command from the central control room. The modem (46) then transfers a signal to the reset port of the microprocessor (42).

The local water meter (40) and the transmitter/receiver unit (53) may either be a self contained unit or wired unit. Both units (40) and (53) are separate units by are physically attached one to the other. If the unit is a self contained unit then the power source (48) will be: (1) solar cells operated by light; (ii) a dynamo or alternator or generator driven by the fluid flow in the pipe system; (iii) any other self contained power source.

If the unit is a wired unit, then the power source (48) will be mains power or power from street light supply. If the power source (48) is taped off the street light supply then the electric power storage must have enough capacity for night charging and a 24 hour usage.

The charging regulator (49) transforms whatever power is supplied by the power source (48) to a voltage compatible with the charging requirements of the electric power storage (50). The power storage (50) comprises a rechargeable or other type of battery. The power storage (50) will supply the required voltage Vcc (52) to all the electronic circuits. The batter voltage level sensor (51) will check the state of the electric storage (50) and will send a signal, on a two wire line, indicating the state of the power storage (50), i.e. zero, low, medium or charged. This will allow the microprocessor (42) to send the relevant information to the central control room. If the power storage is in a poor state the microprocessor will perform crucial tasks only, such a fluid flow.

## Claims

1. A method for reading electronic water meters by means of a longitudinal mechanical wave transmitter/receiver which transmits information through the pipe walls of the water pipes wherein a longitudinal mechanical wave transmitter located on the pipe next to the consumer water meter or local water meter transmits, in accordance with a command or at a predetermined time, information located in the meter on a longitudinal mechanical wave to a longitudinal mechanical receiver located in a local or regional longitudinal mechanical receiver.

2. A method according to claim 1 wherein a longitudinal mechanical wave transmitter in a consumer meter transmits information from the meter on a longitudinal mechanical wave to a longitudinal mechanical wave receiver in a local water meter.

3. A method according to claim 1 such that an electronic transmitter in the local meter transmits information to the local meter on a longitudinal mechanical wave to a longitudinal mechanical wave receiver in a regional water meter.

4. A method according to claim 1 wherein a command which is transmitted as an electronic pulse from a longitudinal mechanical wave transmitter located in a local or regional meter activates the longitudinal mechanical transmitter in the consumer or local meter.

5. A method according to claim 1 wherein the information transmitted from the meter is selective according to the type of command received.

6. A method according to claim 1 wherein the energy source for the longitudinal mechanical wave transmitter is a source of voltage attached to the (i) electric network; (ii) photo cells; (iii) generator or alternator driven by the water flow.

7. A method according to claim 2 wherein the electronic water meters contain a bypass for monitoring and detecting leaks and slow flows of water and with a valve which locks in cases of undesirable predetermined flows.

8. A method according to claim 1 wherein the electronic water meters transmit information on a longitudinal mechanical wave with regard to the total flow, the minimal flow and the locking of the system in cases of over predetermined utilization.

9. A method according to claim 1 wherein the pipe walls are metal walls.

10. A system for use of the method defined in claim 1 comprising electronic consumer, local, and/or regional meters, means for transmission and reception in the infrasonic, sonic or ultrasonic range which are located in these meters, or on the water pipe from a source of voltage for activating the means of transmission and reception, from a network of water pipes between the meters which serves as a mainstay for transmitting the longitudinal mechanical waves and from means for translating the information from the meter to the transmitted longitudinal mechanical wave and from said received wave to any known language.
